# EUROPEAN PATENT APPLICATION

(11) **EP 4 531 123 A1**
(43) Date of publication of application: **02.04.2025**
(21) Application number: 23200378.0
(22) Date of filing: 28.09.2023
(51) Int. Cl.: H01M 4/04, H01M 4/13, H01M 4/139, H01M 4/36, H01M 4/38, H01M 4/587, H01M 10/0525

(54) **METHOD OF OBTAINING A METALATED ELECTRODE**

(71) Applicant: CUSTOMCELLS Holding GmbH, 25524 Itzehoe (DE)
(72) Inventor: Otepov, Sultan, Itzehoe (DE)
(74) Representative: LKGLOBAL Lorenz & Kopf Patentanwalt Attorney at Law PartG mbB

(57) **Abstract**

The invention relates to a method (100) of obtaining a metalated electrode for an energy storage device. The method comprises providing an electrode. The electrode comprises a first material and metal particles. The first material is different from the metal. The method further comprises providing an agent. The agent comprises a solvent and metal ions dissociated in the solvent. The metal ions are metal ions of the metal comprised in the metal particles. The method further comprises obtaining the metalated electrode by exposing the electrode to the agent. The method further comprises removing the metalated electrode from the agent.

## Description

### FIELD OF THE DISCLOSURE

The present disclosure relates to a method of obtaining a metalated electrode for an energy storage device.

### BACKGROUND

Batteries play a critical role in modern society, powering a wide range of devices from portable electronics to electric vehicles. Rechargeable batteries, also referred to as secondary batteries, are often preferred due to their reusability.

The increasing demand for portable electronics and electric vehicles has led to a growing need for batteries with higher energy density, longer lifespan (including number of possible charging cycles of a secondary battery), and improved safety. Furthermore, the shift towards renewable energy sources such as solar and wind power has increased the need for energy storage systems, making batteries an essential technology in the transition to a low-carbon economy.

Due to the importance of batteries, there is a high demand to improve the efficiency and lifespan of batteries, including the battery electrodes (i. e. the anode or the cathode). Battery electrodes are conductive materials that serve as the positive and negative terminals in a battery.

Secondary batteries are based on the principle of moving metal ions as charge carriers from a cathode to an anode and vice versa. These secondary batteries experience a loss of these ions in the first charging step of the formation often referred to as first cycle efficiency. If left uncompensated the loss of metal ions causes a lower gravimetric and volumetric energy density and therefore worsens key characteristics of the secondary battery cell.

This loss is due to the formation of protective layers on the active material. These so-called SEI (solid electrolyte interface) are essential for the function of the cell as they prevent the penetration of electrolyte molecules into the anode material.

Accordingly, pre-metalation of the anodes has been proposed as a way to compensate for the consumption of metal ions in irreversible reactions during the formation of the solid electrolyte interface layer in the initial cycling. By introducing additional metal of the charge carrier species, the consumption of the solid electrolyte interphase may be compensated, leading to improved battery performance.

US11183683B2 is directed to a method for pre-lithiation of negative electrodes during lithium loaded electrode manufacturing for use in lithium-ion capacitors. There is provided a system and method of manufacture of LIC electrodes using thin lithium film having holes therein, and in particular, to the process of manufacturing lithium loaded negative electrodes for lithium-ion capacitors by pre-lithiating electrodes with thin lithium metal films, wherein the thin lithium metal films include holes therein, and the lithium loaded negative electrodes are manufactured using a roll-to-roll lamination manufacturing, process. Further methods of electrode pre-lithiation are known from e.g. US11211205B2, US11329312B2

US20190393480A1 relates to a method of fabricating a pre-lithiated electrode. The method comprises disposing a lithium metal target comprising a layer of lithium metal adjacent to a surface of a prefabricated electrode. The method further comprises heating at least one of the lithium metal target and the prefabricated electrode to a temperature less than or equal to 180 degrees Celsius. The method further comprises compressing the lithium metal target and the prefabricated electrode together while applying ultrasound to the lithium metal target to transfer a quantity of lithium from the lithium metal target to the prefabricated electrode.

Overhoff et al., "A Thorough Analysis of Two Different Pre-Lithiation Techniques for Silicon/Carbon Negative Electrodes in Lithium Ion Batteries", Batteries & Supercaps 2021, 4, 1163-1174, doi: doi.org/10.1002/batt.202100024 compares two approaches for pre-lithiation, i.e. electrochemical pre-lithiation and pre-liathiation by direct contact to Li metal foil.

### SUMMARY OF THE DISCLOSURE

Currently, it remains desirable to provide a method of obtaining a metalated electrode, wherein the metalation process becomes faster and more reliable.

Therefore, the present disclosure relates to a method of obtaining a metalated electrode for an energy storage device. The method comprises providing an electrode. The electrode comprises a first material and metal particles. The first material is different from the metal. The method further comprises providing an agent. The agent comprises a solvent and metal ions dissociated in the solvent. The metal ions are metal ions of the metal comprised in the metal particles. The method further comprises obtaining the metalated electrode by exposing the electrode to the agent. The method further comprises removing the metalated electrode from the agent.

By providing such a method, the process of metalation of the electrode can be optimized for an energy storage device, e.g. a secondary battery or a metal ion capacitor. In particular, the metalation rate can be increased, as explained in the following description in more detail. Hence, the metalation process becomes faster and more reliable.

Accordingly, it becomes possible to add metal ions to the electrode/the first material of the electrode, based on the migration of metal ions (e. g. Li⁺, Na⁺, K⁺, Mg²⁺, Ca²⁺, Al³⁺) before the first charge in order to increase the capacity and lifetime of the final battery cell, e.g. by using suitable solvents, salts and/or metal-organyls in the agent. Metalating the electrode before the first charge may also be referred to as pre-metalating. Metalating the electrode may comprise pre-metalating.

Furthermore, the loss of these ions due to side reactions, e.g. the formation of protective layers on the active material (i.e. the SEI), can be compensated for by introducing additional metal ions into the battery electrode (e. g. the anode) using e.g. a wet chemical process (i.e. by exposing the electrode to the agent) prior to cell assembly. Through this compensation, the usable capacity of the final battery cell can be increased.

In addition, a reservoir of ions can be created that can be consumed over the life of the battery cell, improving the cycling stability of the battery cell.

The method of the present disclosure provides the following further advantages in view of conventional methods.

As compared to conventional "dry" metalation methods, the agent (e.g. an electrolyte) significantly increases the metalation (e.g. lithiation) rate, since it provides an ion-conducting media to all of the electrode (e.g. anode) surfaces it comes into contact with. Therefore, a several-hours long reaction time required for the solid-state processes of the "dry" methods can be significantly shortened. The reaction in the agent (e.g. electrolyte media) can finish as fast as e.g. 10 min, e.g. when a good wetting is achieved.

Furthermore, as compared to conventional "dry" metalation methods, since the reaction is not limited only to the electrode contact surface (e.g. Li-anode), heat build-up from the exothermic metalation reaction is more evenly distributed. In addition, the agent (e.g. liquid electrolyte) provides good dissipation of heat.

Furthermore, as compared to conventional "dry" metalation methods, evenly distributed reaction facilitates homogeneous pre-metalation (e.g. pre-lithiation). This helps to avoid inhomogeneous formations on the electrode (e.g. anode) surface, which is typically observed in the "dry" process.

Furthermore, as compared to conventional "dry" metalation methods, since the metalated electrode is removed from the agent, it can go through a rinsing process. In such a rising process, unreacted metal (e.g. Li), passivation layer (e.g. Li₂CO₃), and release layer metal oxides, as well as the products of side reactions (e.g. LiOH, L₂O, etc.) can be removed from the electrode (e.g. anode) surface. This further improves the quality of the metalated (e.g. pre-lithiated) electrode and ensures that unwanted chemicals do not end up in the final energy storage device/final cell.

The method of the present disclosure allows to apply the direct contact metalation (e.g. pre-lithiation) for composite electrodes (e.g. anodes). In composite electrodes, a high-capacity material is supported in a low-capacity (or inactive) rigid material. Thus, the electrode-metal contact surface during contact pre-metalation is further decreased for composite electrodes and the high-capacity material cannot be efficiently pre-metalation using a dry metalation method (e.g., a calendering method). Using an agent (e.g. an electrolyte media) allows the metal to reach all of the high-capacity material, even the ones that are deep within the low-capacity material.

Beside this, as compared to other conventional electrochemical or electrolysis methods the metalation reaction is spontaneous and does not require any external electric input.

The present disclosure provides a roll-to-roll process for direct-contact metalation (e.g. pre-lithiation) of an electrode assisted by an agent (e.g., electrolyte media). The agent facilitates the transfer of metal ions.

The energy storage device may be a battery or a capacitor, e.g. a lithium-ion capacitor.

The electrode may be an electrode foil. The electrode may comprise an electrode foil.

The term "foil" may denote a sheet of material that can be wound and unwound. The term "foil" may denote any kind of material sheets or other thin structures like a thin film or a thin layer or a layer assembly. The term "foil" may denote foils having any thickness and shape. The term "foil" may denote, for example, foils having a round or a rectangular shape.

The electrode/the metalated electrode may be or may be suitable to serve as an anode or a cathode of a battery cell.

The electrode may be a sheet of material that is useable as one of the electrodes in a battery. The electrode may comprise any kind of material that may be suitable as battery electrode. The electrode may comprise a plurality of layers.

The metalated electrode may be a sheet of material that is useable as one of the electrodes in a battery. The metalated electrode may comprise any kind of material that may be suitable as battery electrode. The metalated electrode may comprise a plurality of layers.

The electrode may comprise an electrode metal layer. The electrode metal layer may comprise a second metal different from the first material and different from the metal. The electrode metal layer may be suitable to be used as a current collector. The electrode metal layer may be a foil.

For example, the electrode metal layer may be made from a conductive metal such as copper or aluminum to serve as a current collector for the electrode. Other examples of materials that may be used in the electrode metal layer (e.g. to form the electrode metal layer) may include nickel-coated copper foil, aluminum-coated copper foil, stainless steel foil, copper-zinc alloy foil. The material of the electrode metal layer may be chosen to guarantee a good electrical conductivity, high thermal stability, and low resistance.

The first material may be a foil material. The electrode may be/may comprise a foil comprising the first material. The first material may be a basic material. The first material may be porous.

The first material and the metal particles of the electrode may be in direct contact.

The first material may, for example, comprise silicon and/or carbon material, metal oxides or phosphates and/or other conversion or intercalation materials feasible for secondary batteries. For example, the first material may comprise a silicon suboxide-carbon (SiOₓ/C, 1 ≤ x ≤ 2) composite. The silicon suboxide-carbon (SiOₓ/C, 1 ≤ x ≤ 2) composite is just one example of a material that may be used. Accordingly, an active material may be applied to one or both sides of the electrode metal layer, e.g. to form a layer of first material. Exemplary active materials may contain but are not limited to metal oxides (lithium cobalt oxide, lithium manganese oxide, lithium nickel manganese cobalt oxide(NMC), lithium vanadium oxide), phosphates (lithium iron phosphate, and/or lithium manganese iron oxide (LMFP)), Prussian blue and/or mixtures thereof on the cathode side (i. e. in case the battery electrode shall serve as a cathode), and/or carbon materials (e. g. graphite, hard carbon), silicon-based materials (silicon, silicon oxide, silicon carbide), titanates, sulfur-based compounds (sulfides, sulfur-polymer-gels), and/or mixtures thereof on the anode side (i. e. in case the battery electrode shall serve as an anode.

In the present disclosure, an electrode comprising a composite first material may also be referred to as an electrode comprising a first material and a second material, the second material being different from the first material.

Exposing the electrode to the agent may comprise immersing the electrode in the agent.

Exposing the electrode to the agent may comprising conditioning the electrode. Conditioning the electrode may refer to adjusting its properties and/or performance and/or structure.

Exposing the electrode to the agent may comprise metalating the electrode. Exposing the electrode to the agent/Metalating the electrode may comprise rearranging the electrode structure such that metal particles (e.g. metal ions) are transferred into the interior of the electrode, e.g. into the interior of the first material.

Exposing the electrode to the agent/metalating the electrode may comprise causing a flow of metal ions into the electrode, e.g. into the first material.

Exposing the electrode to the agent may comprise moving the electrode through a bath of agent.

Since the electrode may pass/may be moved through the bath of agent with a controlled speed, the electrode may be exposed to the agent for a predetermined amount of time. Accordingly, the amount of metalation may also be controlled by the speed of the electrode and the path length within the bath.

The agent may be an electrolyte. The agent may be referred to as electrolyte.

Metalating the electrode may comprise pre-metalating the electrode.

Providing the electrode may comprise forming the electrode by combining a first layer comprising the first material and a metal layer comprising the metal. Providing the electrode may comprise forming the electrode by combining a first layer, comprising the first material, and two metal layers on both sides of the first layer, each metal layer comprising the metal.

The electrode may be a layer assembly comprising the first layer and the one or two metal layers.

The electrode may be symmetrical.

The one or two metal layers may have a thickness in a range of greater than or equal to about 10 nm to less than or equal to about 100 µm, optionally greater than or equal to about 30 nm to less than or equal to about 50 µm, and in certain variations, optionally greater than or equal to about 1 µm to less than or equal to about 10 µm.

The electrode may also comprise a passivation layer between the first layer, which comprises the first material, and the metal layer, which comprises the metal.

E.g., if the metal is lithium, having a passivation layer may have the following advantages: A passivated Li thin film can be stable under dry room conditions (-40°C DP) and should not cause safety issues during handling. The passivation layer, which is typically e.g. Li₂CO₃, does not have to be removed from the Li film, and should not have effect on the pre-lithiation process disclosed in present disclosure.

Combining the first layer and the one or two metal layers may comprise at least one of:
- calendering the one or two metal layers to the first layer, and/or
- depositing the one or two metal layers to the first layer.

Combining the first layer with the one or two metal layers may be performed in a roll process. Combining the first layer with the one or two metal layers may e.g. be performed by unwinding the first layer from a roll, unwinding the one or two metal layers from respective rolls, and combining the unwounded first layer with the unwounded one or two metal layers.

The one or two metal layers also may be deposited to the first layer by thermal evaporation, physical vapor deposition or Stabilized Lithium Metal Powder (SLMP) spraying, and/or via a physical deposition method.

Providing the electrode may comprise combining the first material and the metal, e.g. by putting a layer of the metal onto the first material and/or by SLMP spraying onto the first material. Providing the electrode may comprise activating the reaction, e.g. in case of SLMP spraying or in case of a roll process.

Providing the electrode may be performed prior to exposing the electrode to the agent. The electrode may comprise the first material and metal particles before exposing the electrode to the agent.

Providing the electrode may comprise applying a pressure to the electrode.

The pressure may be a predetermined pressure. The (predetermined) pressure may be applied by deflecting the electrode by a pulley. The predetermined pressure may be generated by winding up the electrode. The predetermined pressure may be a predetermined tensile force.

The pressure may activate a reaction between the metal and the first material. Activating a reaction between the metal and the first material may be especially beneficial in case of combining the first layer with the one or two metal layers by means of a roll process. Activating a reaction between the metal and the first material may also be beneficial in case the one or two metal layers are deposited by means of SLMP spraying.

The electrode may be exposed to the agent without applying an external voltage to the electrode.

Since the metalation reaction between the agent and the electrode is spontaneous, it may not be necessary to apply any external voltage. The term "external voltage" may refer to a voltage that is not generated by the electrochemical reaction between the metal and the electrode.

The first material and the metal of the electrode may be in direct contact. Hence, applying an external voltage to the electrode e.g. may not be necessary.

An external voltage may be a voltage that is not generated by an electrochemical reaction between the agent and the electrode, e.g. between the agent and the metal of the electrode.

The electrode may be exposed to the agent for a predetermined amount of time.

The predetermined amount of time may be above 5 minutes. The predetermined amount of time may be below 30 minutes.

In addition to the predetermined amount of time, the electrode may also be exposed to the agent for a predetermined wetting time, e.g. about 5 minutes, for wetting the electrode. The electrode may be exposed to the agent for a total time that may be above 10 minutes. The total time may be below 35 minutes.

Exposing the electrode to the agent may comprise moving the electrode along a plurality of rolls through a bath comprising the agent.

The rolls may be arranged such that the electrode is moved on parallel tracks, the tracks being tracks between individual rolls. The rolls may allow for a snake like assembly of the electrode in the bath. The rolls may allow for multiple passages of the electrode in the bath.

The electrode may comprise the first material, a second material and an electrode metal layer. The electrode metal layer may comprise a second metal different from the metal and different from the first material and different from the second material. The first material, as compared to the second material, may have a higher rigidity. The second material, as compared to the first material, may have a higher capacity with respect to the metal. Optionally, the first material may comprise graphite. Optionally, the second material may comprise silicon.

The second material may be an active material. The first material may be an inactive (e.g., supporting) material. The first material may be porous.

The electrode metal layer may be a substrate.

The electrode may be a composite electrode comprising the first material, the second material and an electrode metal layer. The electrode metal layer may be a current collector. The electrode metal layer may comprise copper and/or aluminum. The electrode metal layer may be nickel-coated copper foil, aluminum-coated copper foil, stainless steel foil, copper-zinc alloy foil. The material of the electrode metal layer may be chosen to guarantee a good electrical conductivity, high thermal stability, and low resistance.

The solvent may be an anhydrous organic solvent.

The metal may be at least one of lithium, sodium, potassium, magnesium, calcium and aluminium. The agent may comprise dissolved metal salt of the metal.

Optionally, the solvent may comprise at least one of: butylene carbonate, propylene carbonate, ethylene carbonate, vinylene carbonate, vinyl ethylene carbonate, dimethyl carbonate (DMC), diethyl carbonate, dipropyl carbonate, methyl ethyl carbonate, acetonitrile, gamma-butyrolactone, triglyme, tetraglyme, dimethylsulfoxide, dioxolane, sulfolane, room temperature ionic liquids.

Optionally, the metal salt may be a Li salt, e.g. selected from LiF, LiCl, LiBr, LiPF₆, LiClO₄, Organolithium salts and/or mixtures thereof.

Optionally, the agent may comprise LiClO₄ in acetonitrile. Optionally, the agent may comprise LiClO₄ in dimethyl carbonate. E.g., the agent may comprise 1.5 M LiClO₄ in acetonitrile (CH₃CN). E.g., the agent may comprise 1-2 M LiClO₄ in dimethyl carbonate.

Both DMC and acetonitrile have advantages of being inexpensive, volatile, and only moderately toxic. Volatility improves the subsequent drying process, and the lower toxicity limits the health and environment hazards. LiClO₄ has sufficient solubility in CH₃CN and DMC, and is stable towards water, which eliminates the need for anhydrous handling conditions for hazardous LiPF₆.

The method may further comprise, e.g. after removing the metalated electrode from the agent, exposing the metalated electrode to a rinsing solvent and/or drying the metalated electrode.

The method may further comprise dividing the metalated electrode into electrode elements.

The present disclosure further relates to a method of producing an energy storage device, such as a battery cell or a capacitor, e.g. a lithium-ion capacitor. The method may comprise obtaining a metalated electrode as described above.

The present disclosure further relates to a metalated electrode obtained by a method of obtaining a metalated electrode as described above.

The present disclosure may also relate to an energy storage device, e.g. a battery cell or capacitor, e.g. a lithium-ion capacitor, comprising a metalated electrode as described above.

The present disclosure further relates to a system for metalating an electrode. The system may comprise a bath of agent. The agent may comprise a solvent and metal ions dissociated in the solvent. Optionally, the system may be configured to perform the method of obtaining a metalated electrode as described above.

The technology provided by the present disclosure may be applied in various types of batteries such as lithium-ion secondary batteries. Other compatible examples of batteries may be sodium-ion batteries, potassium-ion batteries, magnesium-ion batteries, calcium-ion batteries or aluminum-ion batteries. The technology provided by the present disclosure may also be applied in various types of metal ion capacitors, such as lithium-ion capacitors.

It is intended that combinations of the above-described elements and those within the specification may be made, except where otherwise contradictory.

It is to be understood that both the foregoing general description and the following detailed description are exemplary and explanatory only, are provided for illustration purposes and are not restrictive of the disclosure, as claimed.

The accompanying drawings, which are incorporated in and constitute a part of this specification, illustrate examples of the disclosure and together with the description, and serve to support and illustrate the principles thereof.

### BRIEF DESCRIPTION OF THE DRAWINGS

Fig. 1 shows a flowchart of a method 100 of obtaining a metalated electrode according to examples of the present disclosure.
Figs. 2a-2d schematically show electrodes 200 usable in the method 100 of Fig. 1.
Figs. 3a-3b schematically show metalated electrodes 300 according to examples of the present disclosure.
Fig. 4 schematically shows a first exemplary manufacturing system 400 for obtaining a metalated electrode in the method 100 of Fig. 1.
Fig. 5 schematically shows a second exemplary manufacturing system 500 for obtaining a metalated electrode in the method 100 of Fig. 1.
Fig. 6 schematically shows the metalation process according to examples of the present disclosure.
Fig. 7a schematically shows a metalation process of a composite electrode without exposing the electrode to the agent.
Fig. 7b schematically shows a metalation process of a composite electrode according to examples of the present disclosure.

### DESCRIPTION OF THE DRAWINGS

Reference will now be made in detail to examples of the disclosure, examples of which are illustrated in the accompanying drawings. Wherever possible, the same reference numbers will be used throughout the drawings to refer to the same or like parts.

In the following examples, the electrode may be referred to as an anode and the first metal may be referred to as Lithium. However, also other options are possible, as described in the present disclosure.

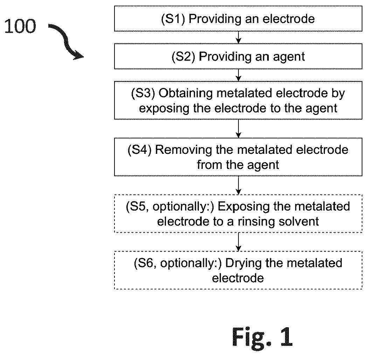

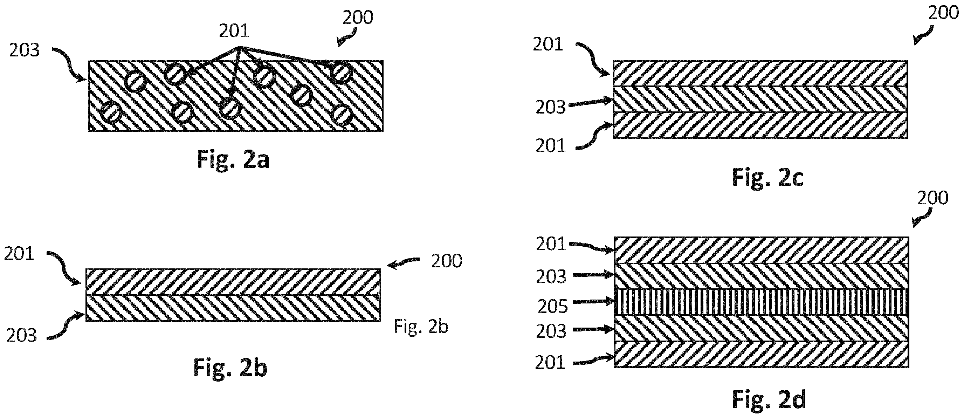

Fig. 1 shows a flowchart of a method 100 of obtaining a metalated electrode according to examples of the present disclosure. Figs. 2a-2d schematically show electrodes 200 usable in the method 100 of Fig. 1.

In step S1, an electrode is provided. The electrode comprises a first material and metal particles. The first material is different from the metal of the metal particles.

Fig. 2a shows a first example of an electrode 200. The electrode 200 comprises metal particles 201. The electrode 200 comprises a first material 203 being different from the metal of the metal particles 201.

Fig. 2b shows a second example of an electrode 200. The electrode 200 comprises a metal layer comprising the metal 201, and a first layer comprising the first material 203. In this example, and in the examples of Figs. 2c-2d, the electrode 200 is a layer assembly.

Fig. 2c shows a third example of an electrode 200. The electrode 200 comprises two metal layers, each comprising the metal 201, and a first layer comprising the first material 203.

Fig. 2d shows a fourth example of an electrode 200. The electrode 200 comprises two metal layers, each comprising the metal 201, two first layers, each comprising the first material 203, and one electrode metal layer 205. The electrode metal layer 205 comprises a second metal different from the metal 201 and different from the first material 203.

The electrode 200 may also comprise one or two passivation layers, e.g. between the one or two metal layers, each comprising the metal 201, and the one or two first layers, each comprising the first material 203. The one or two passivation layers are not shown in Figs. 2a-2d.

E.g., if the metal is lithium, having a passivation layer may have the following advantages: A passivated Li thin film can be stable under dry room conditions (-40°C DP) and should increase the safety of its handling. The passivation layer, which is typically e.g. Li₂CO₃, does not have to be removed from the Li film, and should not have effect on the pre-lithiation process disclosed in present disclosure.

The electrode 200 may be a layer assembly. The electrode 200 may be a foil. The metalated electrode 300 may be a foil.

Providing the electrode may comprise forming the electrode by combining a first layer, comprising the first material 203, and a metal layer, comprising the metal 201. Providing the electrode may comprise forming the electrode by combining a first layer, comprising the first material 203, and two metal layers, each comprising the metal 201, on both sides of the first layer.

The electrode may also comprise two first layers, on either side of an electrode metal layer. In the description, sometimes reference is made to one first layer/an electrode comprising one first layer. Corresponding passages equally apply to electrodes comprising two first layers/to two first layers, unless contradictory.

Combining the first layer and the one or two metal layers may comprise calendering the one or two metal layers to the first layer.

Combining the first layer and the one or two metal layers may comprise unwinding each layer (i.e. the first layer and the one or two metal layers).

Combining the first layer and the one or two metal layers may comprise bringing the first layer and the one or two metal layers into contact.

Combining the first layer and the one or two metal layers may comprise depositing the one or two metal layers to the first layer.

The one or two metal layers may be deposited to the first layer by thermal evaporation, physical vapor deposition or Stabilized Lithium Metal Powder (SLMP) spraying, and/or via a physical deposition method.

Providing the electrode may comprise combining the first material and the metal, e.g. by putting a layer of the metal onto the first material and/or by SLMP spraying. Providing the electrode may comprise activating the reaction, e.g. in case of SLMP spraying or in case of a roll process.

Providing the electrode may be performed prior to exposing the electrode to the agent. The electrode may comprise the first material and metal particles before exposing the electrode to the agent.

In step S2, an agent is provided. The agent comprises a solvent and metal ions dissociated in the solvent. The metal ions are metal ions of the metal comprised in the metal particles.

The solvent may be an anhydrous organic solvent.

The metal may be at least one of Lithium, sodium, potassium, magnesium, calcium and aluminium. The agent may comprise dissolved metal salt of the metal.

Optionally, the solvent may comprise at least one of: butylene carbonate, propylene carbonate, ethylene carbonate, vinylene carbonate, vinyl ethylene carbonate, dimethyl carbonate, diethyl carbonate, dipropyl carbonate, methyl ethyl carbonate, acetonitrile, gamma-butyrolactone, triglyme, tetraglyme, dimethylsulfoxide, dioxolane, sulfolane, room temperature ionic liquids.

Optionally, the metal salt may be a Li salt selected from LiF, LiCl, LiBr, LiPF₆, LiClO₄, Organolithium salts and/or mixtures thereof.

Optionally, the agent may comprise LiClO₄ in acetonitrile. Optionally, the agent may comprise LiClO₄ in dimethyl carbonate. E.g., the agent may comprise 1.5 M LiClO₄ in acetonitrile. E.g., the agent may comprise 1-2 M LiClO₄ in dimethyl carbonate.

In step S3, a metalated electrode is obtained by exposing the electrode to the agent.

The electrode may be exposed to the agent for a predetermined amount of time. The predetermined amount of time may be above 5 minutes. The predetermined amount of time may be below 30 minutes.

In addition to the predetermined amount of time, the electrode may also be exposed to the agent for a predetermined wetting time, e.g. about 5 minutes, for wetting the electrode. The electrode may be exposed to the agent for a total time that may be above 10 minutes. The total time may be below 35 minutes.

In step S4, the metalated electrode is removed from the agent, such that further optional steps can be performed, before the metalated electrode is further processed, e.g. in order to produce an energy storage device/a battery.

In optional step S5, the metalated electrode may be exposed to a rinsing solvent.

In optional step S6, the metalated electrode may be dried.

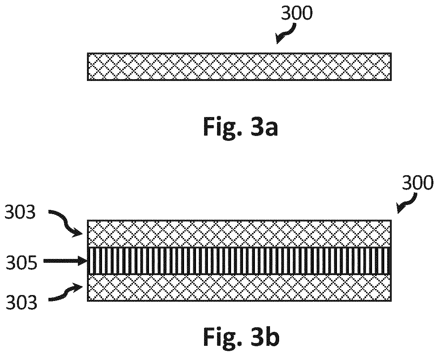

Fig. 3a schematically shows a first example of a metalated electrode 300. The metalated electrode 300 comprises the first material 203 and the metal 201. The metalated electrode 300 may be a single layer. I.e., the metalated electrode may comprise no individual layer of the first material 203 and no individual layer of the metal 201.

Fig. 3b schematically shows a second example of a metalated electrode 300. The metalated electrode 300 comprises an electrode metal layer 305 comprising a second metal different from the metal 201 and different from the first material 203. The electrode metal layer 305 may correspond/may be identical to the electrode metal layer 205 of the electrode 200 not (yet) being metalated. I.e., in some embodiments, the electrode metal layer 305 is not affected/not changed by metalating the electrode. I.e., in some embodiments, the electrode metal layer 305 is not metalated. The metalated electrode 300 comprises two metalated first layers, each comprising a metalated first material 303.

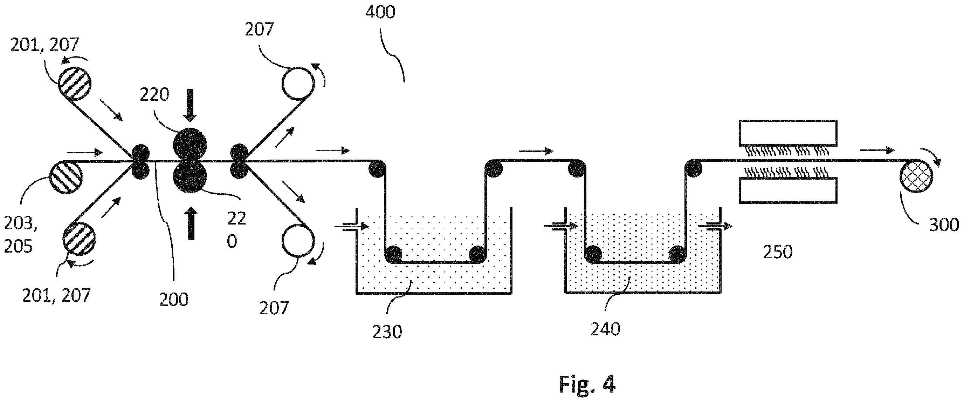

Fig. 4 schematically shows a first exemplary manufacturing system 400 for obtaining a metalated electrode in the method 100 of Fig. 1.

A roll comprising a foil/a first layer comprising the first material 203 is unwound. This foil may also comprise the electrode metal layer 205. This foil may be a pristine electrode foil. Two rolls, each comprising a foil, each comprising the metal 201 and a substrate 207, are each unwound.

The rolls, each comprising the foil, comprising the metal 201 and the substrate 207, may also comprise a passivation layer (not shown) on top of the metal 201. The metal 201 may be on top of the substrate 207.

E.g., if the metal is lithium, this may have the following advantages: A passivated Li thin film can be stable under dry room conditions (-40°C DP) and should improve the safety during its handling. The passivation layer, which is typically e.g. Li₂CO₃, does not have to be removed from the Li film, and should not have effect on the pre-lithiation process disclosed in present disclosure.

The substrate 207 may be a conductive material, e.g., a metal. Examples of metals that the substrate may be comprised of include aluminum (Al), copper (Cu), zinc (Zn), nickel (Ni), cobalt (Co), tin (Sn), silicon (Si), manganese (Mn), magnesium (Mg), alloys thereof, and combinations thereof.

The system 400 may comprise a device for unwinding the respective rolls (not shown in Fig. 4).

The unwounded foils, each comprising the metal 201, are aligned with the unwounded foil/first layer comprising the first material 203. Aligning is performed by means of pulleys (indicated by the black circles). The unwounded foils, each comprising the metal 201, are brought into contact with the unwounded foil/first layer comprising the first material 203. E.g., each of the two foils may be brought into contact with the foil/first layer, comprising the first material 203, on either side of the foil, i.e. from above and from below the foil/first layer comprising the first material 203.

The electrode 200 is provided by calendering the two foils, each comprising the metal 201, onto the foil/first layer comprising the first material 203. Two bold black arrows indicate the pressure applied during calendering by the calendering rolls 220.

Alternatively to calendering, aligning and bringing into contact, another deposition method may be used.

After calendering, the substrates 207 are removed from the electrode and rewound. Depending on the waste disposal regulations, the substrates 207 may be rinsed in a solvent bath (not shown in fig. 4) before being rewound.

The electrode 200 is metalated by exposing the electrode 200 to the agent 230. A metalated electrode 300 is obtained by exposing the electrode 200 to the agent 230.

The electrode 200 may be exposed to, e.g. immersed into, a bath of agent 230. Exposing the electrode to the agent comprises moving the electrode along a plurality of rolls (indicated by black circles) through the bath of agent 230.

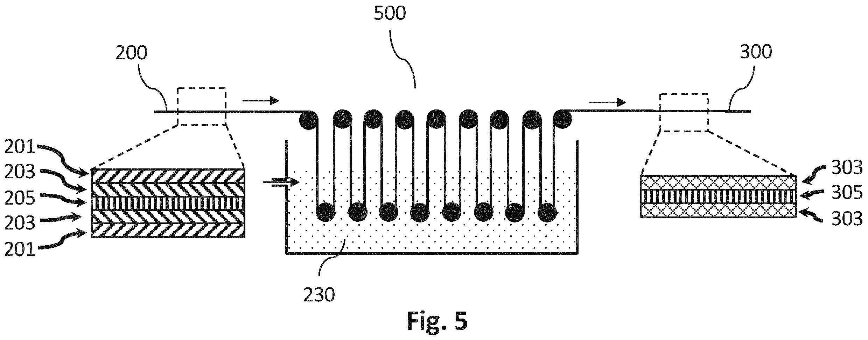

The electrode 200 may make several turns in the bath of agent to increase the path length and to provide sufficient time for reaction/metalation (cf. e.g. also Fig. 5).

The bath of agent may be refreshed with fresh agent.

The metalation/reaction can stop only when a Li particle has no direct contact to the anode. Thus, unreacted Li metal particles will simply detach from the electrode and float to the surface of the bath of agent (due to density difference), where the metal particles may be collected under inert atmosphere for disposal. However, as the Li-electrode reaction is highly spontaneous and the preceding calendering process may ensure strong contact between Li and electrode, the amount of unreacted Li is expected to be minimal. A metalated electrode leaving the electrolyte bath will continuously remove some liquid from the bath, and fresh electrolyte may be added into the bath to compensate for the loss.

After exposing the electrode 200 to the agent 230 and obtaining the metalated electrode 300 thereby, the metalated electrode 300 may be exposed to a rinsing solvent 240. Accordingly, the metalated electrode 300 may be transferred into a bath of rinsing solvent 240, where a counter-currently flowing fresh solvent 240 may remove the metal salt and any unwanted chemicals (e.g., Li₂CO₃) from the metalated electrode 300. The solvent 240 may be the same one used in the bath of agent 230, or any other solvent that can provide sufficient solubility of the chemical species mentioned in this disclosure. Rinsed solvent may be refreshed, e.g. using ion-exchange columns, and may e.g. be re-used for rinsing (cf. e.g. solvent entry in the bath of Fig. 4).

The metalated electrode 300 may be dried in a dryer 250. The dryer 250 may be an in-line drying unit. In the dryer 250, volatile solvent may be removed.

Finally, the metalated electrode 300 may be rewound for further use, e.g. in a cell assembly. Alternatively or in addition, an electrode cutting unit may be implemented into the system at this location.

Fig. 5 schematically shows a second exemplary manufacturing system 500 for obtaining a metalated electrode in the method 100 of Fig. 1. Again, in this example the electrode may be referred to as an anode and the first metal may be referred to as Lithium. However, also other options are possible, as described in the present disclosure.

The example of fig. 5 may principally correspond to that one of fig. 4, wherein the path length of the electrode in the bath of agent 230 has been increased by guiding it along several offset rolls.

An electrode 200 is provided. The electrode 200 comprises two metal layers, each comprising the metal 201, two first layers, each comprising the first material 203, and one electrode metal layer 205. The electrode metal layer 205 comprises a second metal different from the metal 201 and different from the first material 203.

An agent 230 is provided. The agent 230 comprises a solvent and metal ions dissociated in the solvent. The metal ions are metal ions of the metal 201.

The electrode 200 is exposed to the agent 230, and the metalated electrode 300 is obtained thereby.

The metalated electrode 300 comprises an electrode metal layer 305 comprising a second metal different from the metal 201 and different from the first material 203. The electrode metal layer 305 corresponds to/is identical to the electrode metal layer 205 of the electrode 200 not (yet) being metalated. The metalated electrode 300 comprises two metalated first layers, each comprising a metalated first material 303.

Exposing the electrode to the agent may comprise moving the electrode along a plurality of rolls through a bath comprising the agent.

The rolls are arranged such that the electrode is moved on parallel tracks, the tracks being tracks between individual rolls. The rolls allow for a snake like assembly of the electrode in the bath. The rolls allow for multiple passages of the electrode in the bath.

The electrode 200 makes several turns in the bath of agent 230 to provide sufficient time for reaction/metalation.

This allows for reduced dimensions of the bath of agent 230.

The bath dimensions can be significantly decreased to a few meters. Additional several minutes can be needed to provide sufficient time for wetting of the porous electrode and separator.

Typical exposure times to the agent (e.g., reaction times) can be anywhere from 5 to 30 minutes. For example, for a SiOx-based electrode, the exposure time can be 10 min to provide 30% of the degree of pre-lithiation. In such case, if, for example, the web speed is 100 m/h, then electrolyte bath dimensions can be limited to up to 2 m in length by increasing its height to 1 m. It may be necessary to provide additional 5 min needs to give sufficient time for wetting of the electrode 200, which may be porous.

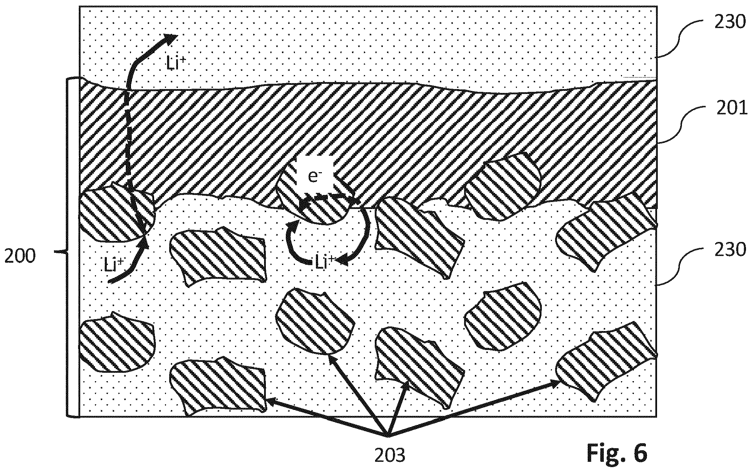

Fig. 6 schematically shows the metalation process according to examples of the present disclosure.

In this example, the electrode may be referred to as an anode and the first metal may be referred to as Lithium. However, also other options are possible, as described in the present disclosure.

The present disclosure provides a method to pre-lithiate/metalate electrodes, e.g. Li-ion battery electrodes, in a roll-to-roll electrochemical process, e.g. using Li thin-films. The Li thin-films may comprise a passivation layer deposited onto a substrate.

The process takes advantage of the spontaneity of the reaction between Li metal and Li-ion battery electrodes. Thus, the electrochemical process e.g. may not require any electricity input.

The electrode 200 is exposed to the agent 230, i.e. to the bath of agent, by passing the electrode 200 through the bath of agent 230.

In the bath of agent 230, Li atoms of the metal 201 oxidize (cf. solid arrows) and liberate Li⁺ ions into the agent 230. At the same time, Li⁺ ions from the agent 230 reduce the first material 203 of the electrode (cf. solid arrows), and thereby metalate the electrode. The electrons of the two half-reactions are transferred by contact areas between the metallic Li and the first material 203 of the electrode (cf. dashed arrows).

The reaction between Li and the electrode (e.g. the anode) is spontaneous, and can proceed on its own. Thus, the electrode may be exposed to the agent without requiring an external voltage. For example, a cell potential between Li and Si anodes is >0.25 V.

The first material 203 may be porous and is hence schematically indicated by individual blobs in Fig. 6. However, in reality, these blobs are connected to each other.

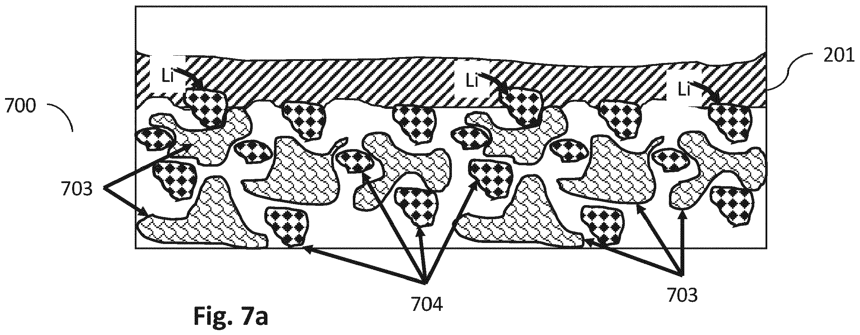

Fig. 7a schematically shows a metalation process of a composite electrode without exposing the composite electrode to an agent.

The composite electrode 700 comprises a first material 703 and a second material 704. The first material 703 is different from the metal 201. The first material 703 has a higher rigidity as compared to the second material 704. The second material 704 has a higher capacity with respect to the metal 201, as compared to the first material 703. The first material 703 may comprise graphite. The second material 704 may comprise silicon. The second material 704 may be an active material.

Without exposing the composite electrode 700 to the agent 230, many portions of the second material 704 cannot be efficiently metalated, as there is no contact between the metal 201 and many portions of the second material 704, especially those portions that are not located at the outer surface of the electrode 700, but deep within the first material 703.

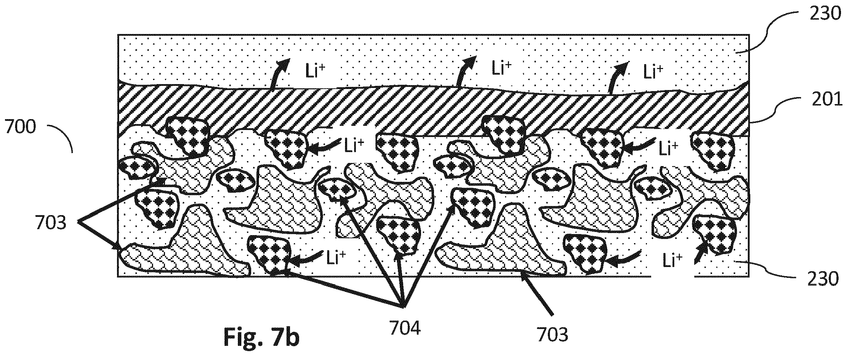

Fig. 7b schematically shows a metalation process of a composite electrode according to examples of the present disclosure.

Exposing the composite electrode 700 to the agent 230 allows to efficiently metalate also those portions of the second material 704 that are located deep within the first material 703.

The composite electrode 700 may also comprise a second metal, e.g. a second metal layer, that may act as a current collector (not shown in Figs. 7a und 7b).

In the description above, the metal may be referred to as Lithium. However, also other options are possible, as described in the present disclosure.

Throughout the description, including the claims, the term "comprising a" should be understood as being synonymous with "comprising at least one" unless otherwise stated. In addition, any range set forth in the description, including the claims should be understood as including its end value(s) unless otherwise stated. Specific values for described elements should be understood to be within accepted manufacturing or industry tolerances known to one of skill in the art, and any use of the terms "substantially" and/or "approximately" and/or "generally" should be understood to mean falling within such accepted tolerances.

Although the present disclosure herein has been described with reference to particular examples, it is to be understood that these examples are merely illustrative of the principles and applications of the present disclosure.

It is intended that the specification and examples be considered as exemplary only, with a true scope of the disclosure being indicated by the following claims.

## Claims

1. A method of obtaining a metalated electrode for an energy storage device, the method comprising:
providing an electrode, the electrode comprising a first material and metal particles, the first material being different from the metal,
providing an agent comprising a solvent and metal ions dissociated in the solvent, the metal ions being metal ions of the metal comprised in the metal particles,
obtaining the metalated electrode by exposing the electrode to the agent, and
removing the metalated electrode from the agent.

2. The method according to claim 1, wherein providing the electrode comprises:
forming the electrode by combining a first layer comprising the first material and a metal layer comprising the metal, or
forming the electrode by combining a first layer comprising the first material and two metal layers on both sides of the first layer, each metal layer comprising the metal.

3. The method according to claim 2, wherein combining the first layer and the one or two metal layers comprises at least one of:
• calendering the one or two metal layers to the first layer, and/or
• depositing the one or two metal layers to the first layer.

4. The method according to any one of the preceding claims, wherein providing the electrode is performed prior to exposing the electrode to the agent.

5. The method according to any one of the preceding claims, wherein providing the electrode comprises applying a pressure to the electrode.

6. The method according to any one of the preceding claims, wherein the electrode is exposed to the agent without applying an external voltage to the electrode.

7. The method according to any one of the preceding claims, wherein the electrode is exposed to the agent for a predetermined amount of time.

8. The method according to any one of the preceding claims, wherein exposing the electrode to the agent comprises moving the electrode along a plurality of rolls through a bath comprising the agent.

9. The method according to any one of the preceding claims,
wherein the electrode comprises the first material, a second material and an electrode metal layer, the electrode metal layer comprising a second metal different from the metal and different from the first material and different from the second material,
wherein the first material, as compared to the second material, has a higher rigidity,
wherein the second material, as compared to the first material, has a higher capacity with respect to the metal,
wherein optionally the first material comprises graphite and the second material comprises silicon.

10. The method according to any one of the preceding claims,
wherein the solvent is an anhydrous organic solvent,
wherein the metal is at least one of Lithium, sodium, potassium, magnesium, calcium and aluminium, and
wherein the agent comprises dissolved metal salt of the metal,
wherein the solvent optionally comprises at least one of: butylene carbonate, propylene carbonate, ethylene carbonate, vinylene carbonate, vinyl ethylene carbonate, dimethyl carbonate, diethyl carbonate, dipropyl carbonate, methyl ethyl carbonate, acetonitrile, gamma-butyrolactone, triglyme, tetraglyme, dimethylsulfoxide, dioxolane, sulfolane, room temperature ionic liquids, wherein optionally, the metal salt is a Li salt selected from LiF, LiCl, LiBr, LiPF₆, LiClO₄, Organolithium salts and/or mixtures thereof,
wherein more optionally, the agent comprises LiClO₄ in acetonitrile or in dimethyl carbonate.

11. The method according to any one of the preceding claims, wherein the method further comprises, after removing the metalated electrode from the agent, exposing the metalated electrode to a rinsing solvent and/or drying the metalated electrode.

12. The method according to any one of the preceding claims, wherein the method further comprises dividing the metalated electrode into electrode elements.

13. A method of producing an energy storage device, such as a battery cell, the method comprising:
obtaining a metalated electrode according to any one of the preceding claims.

14. A metalated electrode obtained by a method according to any one of claims 1 to 12.

15. A system for metalating an electrode, the system comprising:
a bath of agent, wherein the agent comprises a solvent and metal ions dissociated in the solvent,
wherein optionally the system is configured to perform the method according to any one of claims 1 to 12.
